Europäisches Patentamt

European Patent Office

Office européen des brevets

(11) Publication number: **0 317 322 B1**

## EUROPEAN PATENT SPECIFICATION

(45) Date of publication of patent specification: **27.01.93**  (51) Int. Cl.⁵: **G01N 29/00**, G01N 29/04

(21) Application number: **88310877.1**

(22) Date of filing: **17.11.88**

(54) Method for monitoring acoustic emissions.

(30) Priority: **20.11.87 GB 8727178**

(43) Date of publication of application:
**24.05.89 Bulletin 89/21**

(45) Publication of the grant of the patent:
**27.01.93 Bulletin 93/04**

(84) Designated Contracting States:
**AT BE CH DE ES FR GB GR IT LI LU NL SE**

(56) References cited:
**US-A- 4 078 434**

**SOVIET JOURNAL OF NONDESTRUCTIVE
TESTING, vol. 21, no. 10, October 1985, New
York,US;pages 682 - 684; KORLYAKOV et al.:
"Apparatus for the vibroacoustic diagnosis
of electric pumping machinery"**

**5TH INTERNATIONAL CONFERENCE ON PAT-
TERN RECOGNITION,vol. 1, 4 December 1980,
pages 108 - 111; CHAN et al: "Application of
pattern recognition techniques in the iden-
tification of acoustic emission signals"**

(73) Proprietor: **The British Petroleum Company
p.l.c.
Britannic House Moor Lane
London EC2Y 9BU(GB)**

(72) Inventor: **Belchamber, Ronald Malcolm
The British Petroleum Company p.l.c. Chert-
sey Road
Sunbury-on-Thames Middlesex TW16
7LN(GB)**
Inventor: **Collins, Michael Patrick
The British Petroleum Company p.l.c. Chert-
sey Road
Sunbury-on-Thames Middlesex TW16
7LN(GB)**

(74) Representative: **MacLeod, Malcolm et al
BP INTERNATIONAL LIMITED Patents Divi-
sion Chertsey Road
Sunbury-on-Thames Middlesex TW16
7LN(GB)**

**Description**

This invention relates to a method for monitoring the operating conditions of process plant and machinery by the analysis of naturally occurring acoustic emissions.

Industrial process plant and machinery emit sound during their normal or abnormal operation. A change in the operating conditions, e.g. a cyclone separator ceases to function properly or a drill bit becomes blunt, often results in a change in the frequency distribution of the sounds. Other examples where this effect may be noticed include mills, crushers, grinders, fluidised beds, powder transport systems, compressors, pumps, blenders, propellers, turbines, engines, and valves.

We have now discovered a method for monitoring the frequency of the sound emitted during an operation and classifying in the sounds produced under different conditions so that the sounds may be related to the conditions causing them.

Soviet Journal of Nondestructive Testing Vol.21 No.10 October 1985 reveals an apparatus for the vibroacoustic diagnosis of pumping machinery in which acoustic emission temperature kinetic curves and acoustic emission spectra are obtained and used. 5th Int. Conf. on pattern recognition Vol.1 4 December 1980 at pp 108-111 reveals a method by which pattern recognition techniques are used in the identification of acoustic emission signals.

Thus according to the present invention there is provided a method for monitoring the operating conditions of process plant or machinery which method comprises the steps of:

(a) detecting the sound intensity of the plant or machinery by means of a sound transducer, e.g., a microphone, the output from which is an analogue signal, the intensity of which is proportional to the intensity of the sound in the audio frequency range,

(b) converting the analogue signal to a digital signal,

(c) passing the digital signal through a digital band-pass filter to select at least two frequency bands,

(d) utilising the signal power in these bands as signal descriptors and putting them into a multivariate pattern recognition procedure,

(e) utilising the pattern recognition procedure to develop soft models to characterise the signals recorded and to assign them to a particular category of known operating conditions,

(f) again detecting the sound intensity of the process or machinery by means of the sound transducer,

(g) converting the analogue signal to a digital signal,

(h) passing the digital signal through a digital band-pass filter to select the same frequency bands as in (c),

(i) utilising the signal power in these bands as signal descriptors and putting them into a multivariate pattern recognition procedure, and

(j) using the soft models as templates, such that when operating conditions repeat themselves they may be recognised, or a change in conditions may be detected.

Steps (a) - (e) are known as the training mode and steps (f) - (j) as the operational mode.

If necessary, the analogue electrical signal can be amplified and/or passed through analogue band-pass filter to remove frequencies above, say 10 KHz to prevent aliasing, and below say, 50 Hz to remove spurious low frequency signals.

The digital band-pass filter is preferably capable of selecting from two to twenty-four desired frequency bands.

Suitable multivariate statistical techniques are the methods of principal components analysis (PC) and partial least squares (PLS).

PC analysis is a numerical technique which allows multivariate data to be displayed in two dimensions for ease of interpretation. The PC's are vectors which are linear combinations of the original features and take the form:-

$$Y_j = A_{1j}X_1 + A_{2j}X_2 \ldots\ldots\ldots + A_{nj}X_n$$

where $Y_j$ = jth principal component

$X_n$ = feature

$An_j$ = coefficient

The PC's are all orthogonal and equal in number to the measured features. The coefficients of the vectors are calculated so that most of the variance in the data is expressed in the first few PC's whilst the relative magnitude of the coefficient reflects the discriminatory power of the original features. By transforming the data using equations of the above type the data may be plotted in a low dimensional form.

PLS analysis allows the relationship between sets of data (which are related or where it is expected that a relationship exists) to be empirically modelled. Two "training sets" of data (in this case, machinery operating under different conditions and AE (Acoustic Emission) frequency distribution) are used to generate the model. Having developed the model, validation is carried out. "Test sets" of data, acquired under the same conditions but not used to build the model, are then input. Where actual values are known, the errors between these and the values generated are used to validate the accuracy of the model's predictions. If one set is unknown PLS is able to predict the values from knowledge of the other, using the model.

A suitable multivariate pattern recognition technique for 'soft modelling" the frequency distribution is SIMCA (a disjoint principal component analysis technique).

For more details of the statistical methods which may be used, see for example the textbooks; "MULTIVARIATE ANALYSIS," Wold,H,. Academic Press, New York, 1966, Krishnaiah, P.R. (Ed.) and Sharaf, M.A, Illman, D.L and Kowalski, B.R, "CHEMOMETRICS", John Wiley and Sons Inc, New York, 1986, (Elving, P.J., Winefordener, J.D, and Kolthoff, I.M., eds).

The method is applicable to any type of machinery or process plant that generates sound during its operation. It provides the means for determining the operating conditions or change in the operating conditions on-line and non-invasively in near "real-time".

The invention is illustrated by the following Examples 1 and 2 and Figures 1-3 of the accompanying drawings wherein

Figure 1 is a schematic diagram of apparatus for use in the method according to the present invention,

Figure 2 is a plot of the PC analysis for Example 1, and

Figure 3 is a plot of the PC analysis for Example 2.

## Example 1

In Example 1, the sound from a small electrical pump was monitored. Acoustic data was acquired while water was being pumped, while the pump was allowed to run dry and while the pump was stopped.

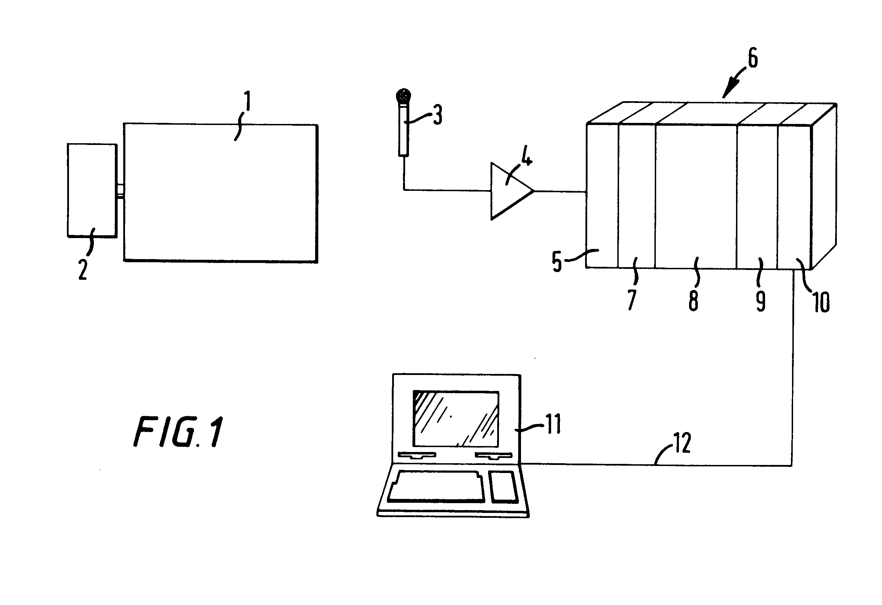

The equipment used is described with reference to Figure 1.

The pump 1 was driven by an electric motor 2.

The sound intensity of pumping was picked up by a flat frequency response audio-microphone 3. This was an Archer condenser microphone and was mounted in a fixed position close to the pump.

Electrical signals from the microphone were amplified using a Rhomicron Instruments MAPS 1 preamplifier 4.

The amplified signals were then analysed by a third octave analyser 6 (Data Beta, DBDTO-10). This comprises an analogue-to-digital converter 7 front-ended with a 12.5 KHz low pass anti-aliasing filter 5, a digital band-pass filter 8, a central processing unit (CPU) 9 and an RS-232 serial line interface 10. The band-pass filter uses a series of digital filters to divide the region 50 Hz to 10 KHz into 24 bands. The acoustic powers in these bands are listed in Table 1. The analyser averages the power in each of these bands for a specified period. In all cases 15 seconds averaging times were used.

The system is controlled by an IBM PC-AT computer 11 linked to the serial line interface 10 by means of a cable 12.

Frequency data was analysed using PC analysis implemented on the microcomputer 11.

Two or three samples from each category were then removed to form a test set. The remaining samples were used to form a training set for SIMCA (a pattern recognition technique). The test set was then used to validate the SIMCA models.

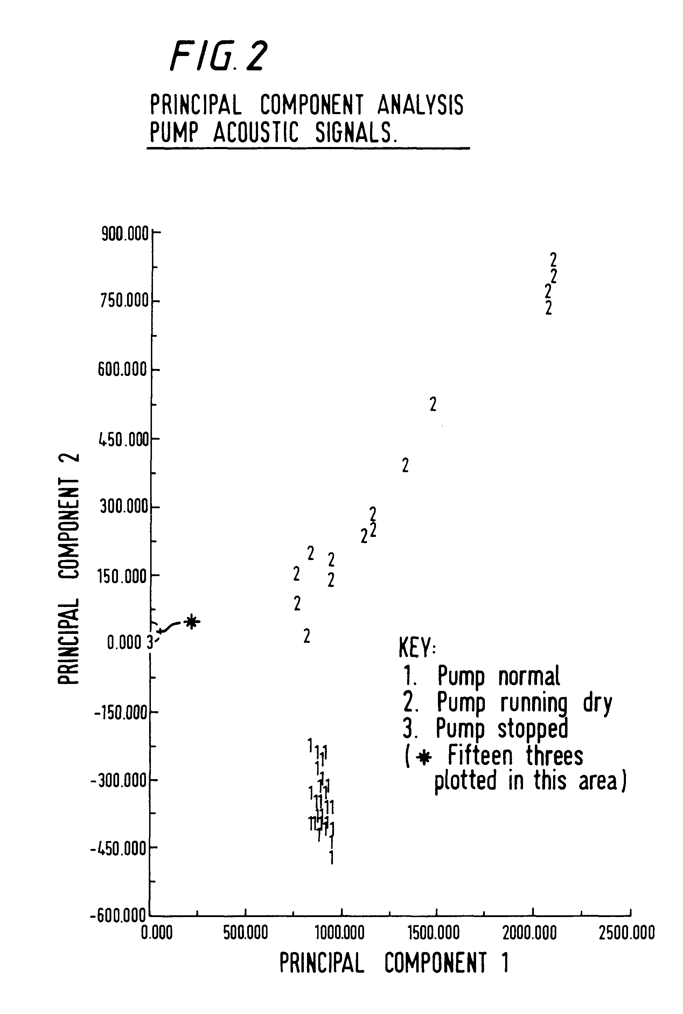

The Principal Component Analysis illustrated graphically in Figure 2 shows that the sound of the pump in normal operation (pumping water), running dry and stopped (just background noise) are easily distinguishable. SIMCA was 100% successful in classifying the seven members of the test set, see Table 3A.

## Example 2

Example 1 was repeated with the difference that a small industrial blender was substituted for the pump.

Acoustic data was acquired when the blender contained a minimum quantity of water, when it was full of water and when it was full of a viscous polyalkylene glycol.

The acoustic powers in the 24 frequency bands are listed in Table 2.

The data was analysed and treated as in Example 1.

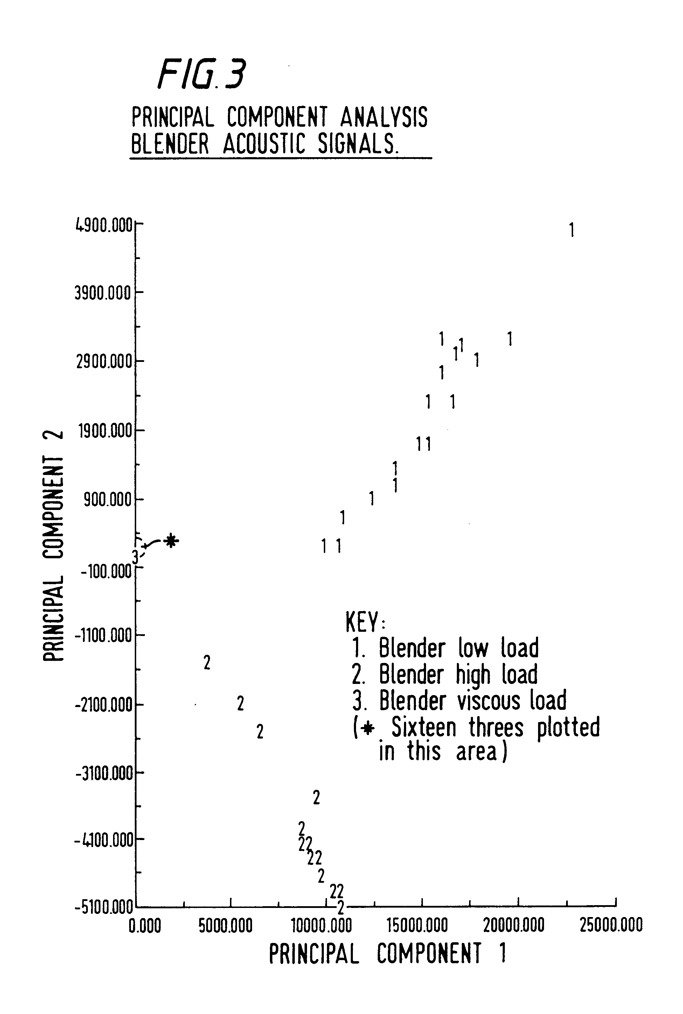

The Principal Component Analysis illustrated graphically in Figure 3 shows that the three operating conditions are easily distinguishable.

As before, SIMCA was 100% successful in classifying the six members of the text set, see Table 3B.

TABLE 1

Acoustic Data from Example 1

Acoustic Power in Frequency bands 1-11 (15 sec. Integration Times)

| Category | 1 | 2 | 3 | 4 | 5 | 6 | 7 | 8 | 9 | 10 | 11 |
|---|---|---|---|---|---|---|---|---|---|---|---|
| 1.000 | 0.470 | 0.180 | 0.450 | 0.120 | 0.090 | 0.250 | 0.730 | 4.420 | 3.970 | 6.600 | 12.290 |
| 1.000 | 12.280 | 9.890 | 8.960 | 8.180 | 7.220 | 6.400 | 6.120 | 8.750 | 7.010 | 8.940 | 13.920 |
| 1.000 | 12.620 | 10.150 | 9.200 | 8.320 | 7.190 | 6.330 | 6.000 | 8.550 | 7.060 | 9.150 | 14.080 |
| 1.000 | 12.730 | 10.280 | 9.290 | 8.370 | 7.220 | 6.340 | 6.010 | 8.790 | 7.090 | 9.400 | 14.310 |
| 1.000 | 12.760 | 10.290 | 9.300 | 8.370 | 7.200 | 6.290 | 5.950 | 8.370 | 7.330 | 9.760 | 14.220 |
| 1.000 | 12.790 | 10.340 | 9.340 | 8.420 | 7.270 | 6.800 | 6.010 | 8.840 | 7.470 | 9.810 | 14.510 |
| 1.000 | 12.810 | 10.370 | 9.330 | 8.450 | 7.220 | 6.320 | 6.010 | 9.340 | 7.240 | 9.870 | 14.590 |
| 1.000 | 12.880 | 10.340 | 9.300 | 8.360 | 7.210 | 6.250 | 6.030 | 9.550 | 7.300 | 9.650 | 14.430 |
| 1.000 | 12.940 | 10.400 | 9.350 | 8.390 | 7.180 | 6.270 | 6.000 | 9.630 | 7.420 | 9.940 | 14.400 |
| 1.000 | 12.420 | 9.970 | 9.010 | 8.210 | 7.200 | 6.440 | 6.250 | 9.420 | 7.010 | 9.090 | 13.870 |
| 1.000 | 12.470 | 9.980 | 9.010 | 8.220 | 7.200 | 6.420 | 6.190 | 9.540 | 7.000 | 9.040 | 14.000 |
| 1.000 | 12.650 | 10.180 | 9.170 | 8.340 | 7.260 | 6.410 | 6.250 | 9.140 | 6.920 | 9.100 | 13.860 |
| 1.000 | 12.890 | 10.360 | 9.280 | 8.360 | 7.240 | 6.320 | 6.310 | 10.520 | 7.160 | 9.240 | 14.080 |
| 1.000 | 12.970 | 10.400 | 9.360 | 8.380 | 7.250 | 6.330 | 6.270 | 10.310 | 7.330 | 9.700 | 14.340 |
| 1.000 | 12.980 | 10.460 | 9.370 | 8.370 | 7.210 | 6.290 | 6.330 | 10.890 | 7.470 | 9.910 | 14.450 |
| 1.000 | 12.960 | 10.380 | 9.350 | 8.400 | 7.190 | 6.300 | 6.540 | 11.240 | 7.380 | 9.760 | 14.340 |
| 1.000 | 12.180 | 9.740 | 8.810 | 8.070 | 7.170 | 6.510 | 6.620 | 9.790 | 7.040 | 8.870 | 13.310 |
| 1.000 | 12.170 | 9.770 | 8.790 | 8.100 | 7.230 | 6.530 | 6.780 | 10.340 | 7.160 | 8.890 | 13.450 |
| 1.000 | 12.260 | 9.820 | 8.860 | 8.080 | 7.160 | 6.470 | 6.690 | 10.180 | 7.230 | 8.920 | 13.570 |
| 1.000 | 12.350 | 9.860 | 8.900 | 8.130 | 7.220 | 6.490 | 6.680 | 10.190 | 7.220 | 8.890 | 13.520 |
| 1.000 | 12.180 | 9.760 | 8.840 | 8.070 | 7.180 | 6.480 | 6.700 | 10.170 | 7.320 | 8.930 | 13.690 |
| 1.000 | 12.240 | 9.730 | 8.770 | 8.040 | 7.120 | 6.830 | 6.690 | 9.990 | 7.390 | 8.760 | 13.440 |
| 1.000 | 12.290 | 9.790 | 8.870 | 8.020 | 7.160 | 6.430 | 6.530 | 9.630 | 7.420 | 8.920 | 13.820 |
| 1.000 | 12.450 | 9.920 | 8.950 | 8.100 | 7.130 | 6.420 | 6.530 | 9.960 | 7.390 | 9.000 | 13.970 |
| 1.000 | 12.430 | 9.900 | 8.930 | 8.100 | 7.120 | 6.330 | 6.330 | 9.150 | 7.230 | 9.130 | 13.890 |
| 1.000 | 12.740 | 10.170 | 9.140 | 8.220 | 7.150 | 6.330 | 6.380 | 9.500 | 7.390 | 9.620 | 14.030 |
| 1.000 | 12.670 | 10.150 | 9.100 | 8.180 | 7.130 | 6.280 | 6.430 | 9.960 | 7.480 | 9.690 | 14.280 |
| 1.000 | 12.620 | 10.090 | 9.040 | 8.150 | 7.070 | 6.260 | 6.460 | 10.330 | 7.490 | 9.620 | 14.250 |
| 1.000 | 12.430 | 9.900 | 8.920 | 8.090 | 7.090 | 6.320 | 6.470 | 9.840 | 7.280 | 9.440 | 13.810 |
| 1.000 | 12.410 | 9.860 | 8.900 | 8.010 | 7.080 | 6.290 | 6.480 | 10.260 | 7.310 | 8.960 | 13.740 |
| 1.000 | 12.510 | 9.960 | 8.930 | 8.080 | 7.070 | 6.300 | 6.410 | 10.380 | 7.360 | 9.030 | 13.670 |
| 2.000 | 13.800 | 11.030 | 9.790 | 8.450 | 7.090 | 6.070 | 6.030 | 9.990 | 8.440 | 12.560 | 20.640 |
| 2.000 | 13.850 | 11.070 | 9.820 | 8.510 | 7.110 | 6.050 | 6.070 | 10.420 | 9.100 | 13.140 | 21.180 |
| 2.000 | 13.740 | 11.030 | 9.760 | 8.490 | 7.100 | 6.120 | 6.170 | 10.350 | 9.440 | 13.580 | 21.480 |
| 2.000 | 13.850 | 11.090 | 9.810 | 8.460 | 7.090 | 6.060 | 6.200 | 11.010 | 9.960 | 14.020 | 21.810 |
| 2.000 | 12.960 | 10.390 | 9.280 | 8.340 | 7.210 | 6.320 | 6.340 | 11.680 | 8.180 | 11.850 | 17.300 |
| 2.000 | 12.820 | 10.170 | 9.090 | 8.200 | 7.130 | 6.360 | 6.400 | 11.260 | 8.150 | 10.590 | 15.810 |
| 2.000 | 12.530 | 9.980 | 8.920 | 8.070 | 7.180 | 6.470 | 6.430 | 9.510 | 7.770 | 10.520 | 14.060 |
| 2.000 | 12.620 | 9.980 | 8.940 | 8.060 | 7.110 | 6.360 | 6.390 | 10.160 | 7.680 | 10.380 | 14.580 |
| 2.000 | 12.280 | 9.840 | 8.830 | 8.010 | 7.150 | 6.490 | 6.610 | 9.880 | 7.610 | 10.270 | 13.670 |
| 2.000 | 12.110 | 9.690 | 8.730 | 7.930 | 7.140 | 6.510 | 6.630 | 9.440 | 7.050 | 9.290 | 13.110 |
| 2.000 | 11.520 | 9.160 | 8.290 | 7.580 | 6.890 | 6.470 | 6.640 | 8.850 | 6.540 | 7.980 | 8.680 |
| 2.000 | 11.330 | 8.990 | 8.120 | 7.460 | 6.770 | 6.340 | 6.650 | 9.420 | 6.510 | 7.480 | 8.180 |
| 2.000 | 11.460 | 9.130 | 8.190 | 7.550 | 6.890 | 6.440 | 6.810 | 10.060 | 6.610 | 7.650 | 8.140 |
| 2.000 | 11.760 | 9.450 | 8.490 | 7.790 | 7.030 | 6.510 | 6.970 | 10.570 | 7.130 | 8.920 | 10.140 |
| 2.000 | 11.870 | 9.360 | 8.470 | 7.690 | 6.990 | 6.480 | 6.670 | 9.830 | 6.970 | 8.310 | 9.750 |
| 3.000 | 7.740 | 3.540 | 6.660 | 1.840 | 1.720 | 5.730 | 1.670 | 0.850 | 0.670 | 0.630 | 0.530 |
| 3.000 | 7.630 | 3.550 | 6.180 | 1.820 | 1.700 | 5.000 | 1.610 | 0.840 | 0.670 | 0.640 | 0.540 |
| 3.000 | 7.790 | 3.610 | 6.300 | 1.850 | 1.720 | 5.220 | 1.620 | 0.850 | 0.670 | 0.630 | 0.530 |
| 3.000 | 7.670 | 3.530 | 6.490 | 1.810 | 1.710 | 5.370 | 1.610 | 0.810 | 0.650 | 0.600 | 0.490 |
| 3.000 | 7.270 | 3.400 | 5.790 | 1.730 | 1.630 | 4.420 | 1.550 | 0.790 | 0.650 | 0.610 | 0.510 |
| 3.000 | 7.110 | 3.450 | 5.640 | 1.770 | 1.700 | 4.230 | 1.600 | 0.800 | 0.680 | 0.450 | 0.590 |
| 3.000 | 7.400 | 3.450 | 5.920 | 1.750 | 1.630 | 4.720 | 1.530 | 0.800 | 0.670 | 0.610 | 0.500 |
| 3.000 | 7.470 | 3.530 | 5.980 | 1.810 | 1.710 | 4.740 | 1.560 | 0.840 | 0.680 | 0.640 | 0.540 |
| 3.000 | 7.280 | 3.360 | 5.820 | 1.720 | 1.600 | 4.590 | 1.500 | 0.790 | 0.640 | 0.600 | 0.490 |
| 3.000 | 7.420 | 3.460 | 5.960 | 1.760 | 1.640 | 4.730 | 1.540 | 0.810 | 0.660 | 0.610 | 0.480 |
| 3.000 | 7.730 | 3.580 | 6.470 | 1.830 | 1.710 | 5.370 | 1.640 | 0.850 | 0.680 | 0.630 | 0.550 |
| 3.000 | 7.940 | 3.760 | 6.380 | 1.940 | 1.790 | 5.070 | 1.680 | 0.920 | 0.750 | 0.690 | 0.590 |
| 3.000 | 7.050 | 3.310 | 5.640 | 1.680 | 1.600 | 4.340 | 1.480 | 0.770 | 0.620 | 0.590 | 0.480 |
| 3.000 | 7.980 | 3.860 | 6.610 | 2.030 | 1.950 | 5.140 | 1.920 | 0.960 | 0.770 | 0.710 | 0.630 |
| 3.000 | 7.620 | 3.620 | 5.080 | 1.860 | 1.770 | 4.780 | 1.660 | 0.860 | 0.680 | 0.640 | 0.540 |

Category 1.000 = Normal operation

Category 2.000 = Pump running dry

Category 3.000 = Pump stopped

4

## TABLE 1 (Continued)

### Acoustic Power in Frequency Bands 12-24 (15 sec. Integration Times)

| 12 | 13 | 14 | 15 | 16 | 17 | 18 | 19 | 20 | 21 | 22 | 23 | 24 |
|---|---|---|---|---|---|---|---|---|---|---|---|---|
| 30.790 | 53.340 | 264.970 | 499.940 | 64.900 | 110.410 | 22.350 | 40.360 | 637.580 | 427.690 | 54.560 | 72.680 | 33.750 |
| 31.360 | 51.940 | 205.270 | 282.630 | 56.880 | 73.690 | 22.370 | 36.920 | 701.070 | 454.810 | 51.190 | 74.390 | 32.620 |
| 31.840 | 53.790 | 250.160 | 399.700 | 63.020 | 105.990 | 22.800 | 40.260 | 679.160 | 437.540 | 54.200 | 73.780 | 35.370 |
| 32.710 | 54.010 | 259.640 | 434.390 | 66.620 | 104.660 | 23.210 | 40.750 | 679.380 | 450.130 | 53.650 | 76.820 | 34.550 |
| 32.500 | 53.680 | 256.170 | 447.430 | 68.380 | 105.660 | 22.930 | 42.410 | 766.600 | 458.410 | 58.090 | 74.550 | 34.670 |
| 33.210 | 53.240 | 256.440 | 464.230 | 61.700 | 101.300 | 23.330 | 43.880 | 785.460 | 430.710 | 56.140 | 76.240 | 33.980 |
| 33.200 | 53.010 | 259.520 | 458.670 | 63.910 | 107.360 | 22.830 | 41.860 | 677.370 | 445.710 | 56.430 | 74.660 | 34.990 |
| 32.900 | 52.510 | 264.050 | 463.400 | 63.520 | 103.650 | 23.130 | 42.040 | 675.460 | 465.460 | 56.230 | 73.950 | 33.580 |
| 33.550 | 51.760 | 264.910 | 465.500 | 63.950 | 102.910 | 23.420 | 42.280 | 709.780 | 443.050 | 56.360 | 75.970 | 35.160 |
| 31.320 | 49.460 | 200.630 | 283.840 | 56.250 | 94.370 | 22.880 | 37.430 | 718.880 | 513.130 | 52.690 | 67.260 | 32.660 |
| 31.460 | 49.830 | 222.720 | 462.370 | 56.960 | 98.710 | 22.910 | 37.520 | 723.010 | 511.340 | 53.790 | 70.410 | 35.060 |
| 30.920 | 50.170 | 223.400 | 358.120 | 57.590 | 101.210 | 21.910 | 39.450 | 685.330 | 491.100 | 53.520 | 69.660 | 33.650 |
| 32.470 | 52.110 | 251.730 | 420.300 | 63.830 | 104.980 | 22.940 | 40.480 | 669.710 | 469.100 | 56.330 | 72.830 | 34.290 |
| 32.670 | 50.620 | 251.670 | 435.510 | 60.810 | 99.240 | 22.680 | 41.120 | 706.960 | 461.470 | 56.170 | 71.390 | 32.510 |
| 33.530 | 50.060 | 247.710 | 430.400 | 59.480 | 98.260 | 22.700 | 41.400 | 717.550 | 460.430 | 55.670 | 73.450 | 34.350 |
| 33.630 | 49.530 | 243.160 | 426.700 | 60.580 | 97.700 | 22.650 | 41.000 | 704.240 | 476.260 | 56.260 | 73.890 | 33.520 |
| 30.080 | 46.090 | 166.100 | 175.080 | 47.420 | 77.240 | 24.060 | 33.860 | 651.920 | 544.150 | 48.570 | 65.270 | 30.900 |
| 30.410 | 47.890 | 168.720 | 177.350 | 45.490 | 73.830 | 23.280 | 34.160 | 691.140 | 561.920 | 49.140 | 66.510 | 30.420 |
| 30.450 | 47.610 | 167.490 | 194.310 | 48.390 | 75.910 | 24.130 | 34.510 | 689.570 | 520.870 | 51.160 | 67.290 | 32.090 |
| 30.850 | 47.090 | 166.700 | 195.620 | 48.580 | 82.480 | 23.660 | 34.470 | 693.660 | 540.350 | 50.450 | 67.970 | 34.440 |
| 30.830 | 47.100 | 167.190 | 178.670 | 48.770 | 79.340 | 23.680 | 34.630 | 677.800 | 575.190 | 51.770 | 72.980 | 31.980 |
| 30.430 | 46.750 | 166.650 | 171.620 | 45.170 | 74.620 | 23.200 | 33.630 | 675.270 | 569.440 | 51.560 | 68.290 | 34.670 |
| 31.220 | 47.510 | 180.400 | 194.060 | 50.280 | 88.020 | 23.930 | 34.160 | 690.280 | 534.710 | 50.330 | 65.890 | 30.890 |
| 31.790 | 48.820 | 186.880 | 224.220 | 53.700 | 90.500 | 22.990 | 35.710 | 723.020 | 511.280 | 51.220 | 68.800 | 33.610 |
| 31.490 | 49.630 | 198.360 | 248.900 | 54.960 | 94.430 | 22.760 | 36.200 | 741.930 | 533.470 | 53.390 | 67.770 | 32.930 |
| 32.920 | 50.520 | 226.690 | 344.100 | 59.180 | 106.820 | 22.620 | 39.050 | 699.850 | 492.420 | 52.470 | 68.750 | 33.110 |
| 33.040 | 50.900 | 223.650 | 341.340 | 62.020 | 110.620 | 22.090 | 39.180 | 687.330 | 484.140 | 53.950 | 68.600 | 33.370 |
| 33.020 | 50.540 | 214.140 | 317.810 | 59.970 | 101.340 | 22.460 | 40.140 | 734.420 | 501.060 | 53.740 | 70.460 | 31.540 |
| 32.000 | 48.620 | 188.760 | 252.870 | 56.920 | 100.940 | 22.140 | 37.170 | 756.570 | 516.750 | 51.540 | 68.420 | 32.920 |
| 32.290 | 47.790 | 186.110 | 234.220 | 57.080 | 98.990 | 23.020 | 36.330 | 733.510 | 498.280 | 53.220 | 69.380 | 30.950 |
| 31.580 | 47.870 | 206.260 | 292.400 | 53.190 | 87.300 | 22.330 | 38.460 | 776.210 | 526.700 | 53.980 | 69.880 | 32.180 |
| 41.920 | 78.030 | 312.680 | 245.850 | 174.420 | 161.330 | 534.650 | 1053.480 | 769.100 | 1552.190 | 337.790 | 742.950 | 203.940 |
| 43.360 | 85.120 | 334.600 | 197.060 | 184.920 | 173.390 | 567.230 | 901.660 | 795.260 | 1584.940 | 348.620 | 785.060 | 200.440 |
| 42.560 | 84.750 | 328.660 | 166.000 | 171.320 | 157.960 | 551.400 | 766.060 | 776.160 | 1611.290 | 342.210 | 808.470 | 200.280 |
| 42.550 | 87.180 | 329.020 | 167.800 | 174.730 | 164.760 | 557.070 | 749.810 | 814.650 | 1572.510 | 345.240 | 837.220 | 209.080 |
| 32.030 | 66.390 | 194.210 | 97.110 | 155.930 | 139.550 | 152.600 | 652.040 | 550.040 | 1239.280 | 220.100 | 315.370 | 311.150 |
| 30.220 | 60.660 | 181.420 | 90.470 | 138.720 | 131.040 | 130.700 | 418.550 | 526.100 | 1118.450 | 217.280 | 308.030 | 289.390 |
| 102.320 | 56.190 | 141.610 | 87.220 | 113.890 | 103.540 | 103.180 | 179.300 | 457.650 | 1005.850 | 188.000 | 270.270 | 278.120 |
| 28.880 | 58.050 | 140.950 | 93.360 | 130.770 | 113.920 | 111.330 | 196.970 | 485.480 | 991.280 | 193.820 | 272.710 | 260.120 |
| 28.850 | 55.660 | 106.570 | 89.060 | 134.690 | 116.790 | 103.300 | 192.410 | 469.150 | 960.720 | 182.430 | 241.100 | 286.120 |
| 25.540 | 47.170 | 113.990 | 81.220 | 117.940 | 125.300 | 81.830 | 160.530 | 403.850 | 807.100 | 155.510 | 195.720 | 216.940 |
| 18.020 | 38.070 | 81.780 | 47.780 | 81.420 | 114.780 | 63.720 | 167.960 | 348.810 | 627.520 | 142.240 | 144.540 | 188.060 |
| 15.110 | 30.890 | 88.440 | 55.570 | 75.260 | 104.070 | 50.630 | 110.660 | 495.700 | 600.970 | 114.460 | 126.450 | 136.640 |
| 16.140 | 34.410 | 84.230 | 46.330 | 78.570 | 112.870 | 54.210 | 148.850 | 399.840 | 612.940 | 121.450 | 126.670 | 143.330 |
| 19.650 | 45.970 | 80.660 | 43.530 | 77.720 | 121.140 | 63.830 | 211.870 | 367.490 | 696.410 | 150.110 | 156.580 | 203.570 |
| 16.590 | 36.610 | 99.320 | 63.310 | 94.410 | 111.110 | 63.300 | 97.780 | 409.760 | 849.830 | 139.470 | 158.040 | 175.820 |
| 0.540 | 0.660 | 0.830 | 1.130 | 1.660 | 2.150 | 2.680 | 3.110 | 3.290 | 3.560 | 4.220 | 4.000 | 4.750 |
| 0.570 | 0.710 | 0.910 | 1.430 | 1.850 | 2.340 | 2.890 | 3.360 | 3.560 | 3.830 | 4.300 | 4.140 | 4.680 |
| 0.560 | 0.710 | 0.870 | 1.200 | 1.750 | 2.240 | 2.910 | 3.220 | 3.390 | 3.700 | 4.260 | 4.090 | 4.680 |
| 0.490 | 0.630 | 0.790 | 1.160 | 1.740 | 2.240 | 2.830 | 3.190 | 3.550 | 3.840 | 4.410 | 4.270 | 4.700 |
| 0.530 | 0.710 | 0.950 | 1.360 | 1.980 | 2.550 | 3.160 | 3.560 | 3.680 | 3.970 | 4.610 | 4.470 | 4.730 |
| 0.690 | 0.940 | 1.280 | 1.710 | 2.380 | 2.880 | 3.330 | 3.680 | 3.780 | 4.110 | 4.580 | 4.300 | 5.030 |
| 0.500 | 0.620 | 0.830 | 1.180 | 1.780 | 2.340 | 2.950 | 3.460 | 3.710 | 4.010 | 4.590 | 4.310 | 4.480 |
| 0.560 | 0.730 | 0.930 | 1.330 | 1.920 | 2.470 | 3.120 | 3.480 | 3.680 | 3.910 | 4.500 | 4.470 | 4.780 |
| 0.510 | 0.660 | 0.860 | 1.210 | 1.830 | 2.350 | 2.900 | 3.350 | 3.420 | 3.730 | 4.410 | 4.170 | 4.410 |
| 0.500 | 0.630 | 0.800 | 1.170 | 1.740 | 2.270 | 2.930 | 3.520 | 3.690 | 3.950 | 4.650 | 4.250 | 4.790 |
| 0.570 | 0.690 | 0.870 | 1.170 | 1.720 | 2.250 | 2.760 | 3.170 | 3.410 | 3.750 | 4.400 | 4.280 | 4.450 |
| 0.600 | 0.750 | 0.920 | 1.260 | 1.880 | 2.410 | 3.030 | 3.530 | 3.640 | 4.020 | 4.490 | 4.310 | 4.880 |
| 0.510 | 0.660 | 0.850 | 1.250 | 1.850 | 2.430 | 3.030 | 3.430 | 3.620 | 3.890 | 4.510 | 4.230 | 4.980 |
| 0.690 | 0.960 | 1.300 | 1.820 | 2.570 | 3.150 | 3.740 | 4.130 | 4.140 | 4.360 | 4.880 | 4.700 | 5.200 |
| 0.580 | 0.750 | 1.000 | 1.430 | 2.070 | 2.630 | 3.260 | 3.690 | 3.790 | 4.100 | 4.990 | 4.470 | 4.920 |

## TABLE 2

### Acoustic Data from Example 2

### Acoustic Power in Frequency Bands 1-11 (15 sec. Integration Times)

| Category | 1 | 2 | 3 | 4 | 5 | 6 | 7 | 8 | 9 | 10 | 11 |
|---|---|---|---|---|---|---|---|---|---|---|---|
| 1.000 | 19.530 | 14.190 | 12.390 | 9.090 | 7.310 | 7.720 | 11.780 | 37.890 | 43.980 | 582.120 | 2081.500 |
| 1.000 | 19.620 | 14.320 | 12.340 | 9.210 | 7.560 | 8.170 | 13.340 | 46.820 | 53.190 | 586.990 | 2219.340 |
| 1.000 | 19.890 | 14.440 | 12.570 | 9.180 | 7.530 | 8.050 | 13.480 | 47.950 | 55.700 | 622.120 | 2404.230 |
| 1.000 | 20.390 | 14.760 | 12.870 | 9.460 | 7.840 | 8.880 | 15.370 | 57.230 | 64.580 | 705.170 | 2874.270 |
| 1.000 | 20.650 | 14.970 | 12.980 | 9.580 | 8.060 | 9.570 | 16.750 | 63.620 | 75.060 | 824.550 | 3344.490 |
| 1.000 | 20.490 | 14.880 | 12.920 | 9.600 | 7.980 | 9.260 | 18.140 | 69.090 | 77.530 | 744.550 | 3350.070 |
| 1.000 | 20.500 | 14.880 | 12.950 | 9.650 | 8.230 | 9.920 | 18.730 | 76.500 | 86.850 | 740.090 | 3447.720 |
| 1.000 | 20.930 | 15.230 | 13.250 | 9.900 | 8.560 | 10.570 | 20.570 | 82.800 | 95.760 | 884.430 | 3926.440 |
| 1.000 | 21.020 | 15.200 | 13.190 | 9.860 | 8.460 | 10.280 | 20.200 | 85.780 | 93.020 | 858.810 | 4130.850 |
| 1.000 | 20.890 | 15.140 | 13.250 | 9.860 | 8.480 | 10.200 | 20.980 | 92.200 | 96.930 | 779.680 | 3925.230 |
| 1.000 | 21.310 | 15.390 | 13.310 | 10.110 | 8.600 | 10.730 | 22.670 | 101.300 | 104.610 | 944.430 | 4577.670 |
| 1.000 | 21.630 | 15.510 | 13.380 | 10.150 | 8.840 | 11.100 | 24.880 | 104.060 | 109.060 | 1053.730 | 4766.850 |
| 1.000 | 21.680 | 15.660 | 13.510 | 10.070 | 8.710 | 10.550 | 23.650 | 96.670 | 104.880 | 931.830 | 4818.290 |
| 1.000 | 21.760 | 15.730 | 13.450 | 9.930 | 8.290 | 9.290 | 19.010 | 71.290 | 82.820 | 972.000 | 4614.140 |
| 1.000 | 21.630 | 15.730 | 13.540 | 10.080 | 8.510 | 10.580 | 24.030 | 93.470 | 102.620 | 929.820 | 4782.890 |
| 1.000 | 21.870 | 15.830 | 13.800 | 10.160 | 8.690 | 11.150 | 23.960 | 98.470 | 105.300 | 1055.320 | 4961.700 |
| 1.000 | 22.230 | 16.100 | 13.870 | 10.540 | 9.260 | 12.490 | 29.150 | 94.840 | 117.750 | 1143.070 | 5423.810 |
| 1.000 | 22.460 | 16.360 | 13.980 | 10.690 | 9.310 | 11.830 | 27.200 | 90.960 | 115.220 | 944.660 | 6039.060 |
| 2.000 | 18.060 | 12.960 | 11.740 | 8.160 | 6.330 | 5.840 | 5.660 | 14.850 | 14.510 | 50.910 | 184.890 |
| 2.000 | 18.680 | 13.270 | 11.880 | 8.190 | 6.300 | 5.680 | 5.950 | 23.010 | 25.360 | 90.820 | 515.950 |
| 2.000 | 19.050 | 13.400 | 12.040 | 8.290 | 6.400 | 5.700 | 6.100 | 24.490 | 29.870 | 115.400 | 671.200 |
| 2.000 | 20.310 | 14.260 | 12.590 | 8.570 | 6.530 | 5.910 | 10.470 | 70.640 | 89.700 | 185.030 | 1412.140 |
| 2.000 | 19.720 | 13.860 | 12.310 | 8.330 | 6.360 | 5.760 | 12.540 | 86.680 | 40.130 | 54.670 | 573.100 |
| 2.000 | 19.770 | 13.830 | 12.250 | 8.300 | 6.340 | 5.740 | 16.250 | 119.040 | 52.160 | 47.140 | 499.000 |
| 2.000 | 19.510 | 13.810 | 12.070 | 8.350 | 6.340 | 5.670 | 15.040 | 113.460 | 51.720 | 42.950 | 450.880 |
| 2.000 | 19.600 | 13.770 | 12.030 | 8.220 | 6.270 | 5.680 | 12.330 | 98.730 | 46.450 | 41.550 | 421.230 |
| 2.000 | 19.770 | 13.780 | 12.390 | 8.290 | 6.340 | 5.830 | 10.050 | 92.620 | 46.600 | 43.920 | 423.160 |
| 2.000 | 19.720 | 13.760 | 12.160 | 8.280 | 6.290 | 5.740 | 8.900 | 82.650 | 44.520 | 42.350 | 407.870 |
| 2.000 | 19.620 | 13.730 | 12.210 | 8.350 | 6.320 | 5.690 | 8.990 | 90.580 | 50.040 | 44.330 | 410.410 |
| 2.000 | 19.540 | 13.850 | 12.130 | 8.300 | 6.390 | 5.700 | 9.550 | 77.050 | 45.850 | 45.540 | 440.270 |
| 2.000 | 19.610 | 13.850 | 12.030 | 8.440 | 6.400 | 5.740 | 19.680 | 156.090 | 53.160 | 54.880 | 562.270 |
| 2.000 | 19.570 | 14.070 | 12.070 | 8.520 | 6.500 | 5.780 | 18.130 | 118.600 | 31.760 | 93.540 | 880.290 |
| 2.000 | 19.560 | 14.080 | 11.940 | 8.490 | 6.510 | 5.750 | 19.550 | 139.180 | 31.000 | 105.620 | 912.190 |
| 2.000 | 19.630 | 14.220 | 11.990 | 8.640 | 6.590 | 5.820 | 19.570 | 139.790 | 31.920 | 118.140 | 978.660 |
| 2.000 | 19.720 | 14.180 | 12.110 | 8.570 | 6.520 | 5.890 | 21.910 | 159.340 | 32.920 | 125.470 | 1023.080 |
| 3.000 | 1.620 | 0.230 | 1.740 | 0.050 | 0.030 | 0.670 | 0.040 | 0.050 | 0.120 | 0.450 | 2.380 |
| 3.000 | 1.720 | 0.240 | 1.800 | 0.050 | 0.030 | 0.690 | 0.050 | 0.050 | 0.120 | 0.470 | 2.650 |
| 3.000 | 1.570 | 0.220 | 1.650 | 0.040 | 0.030 | 0.648 | 0.040 | 0.060 | 0.150 | 0.690 | 2.800 |
| 3.000 | 1.740 | 0.240 | 1.820 | 0.050 | 0.030 | 0.690 | 0.050 | 0.060 | 0.140 | 0.470 | 2.800 |
| 3.000 | 1.740 | 0.250 | 1.840 | 0.050 | 0.030 | 0.700 | 0.050 | 0.050 | 0.130 | 0.450 | 2.890 |
| 3.000 | 1.740 | 0.250 | 1.830 | 0.050 | 0.030 | 0.700 | 0.050 | 0.050 | 0.140 | 0.460 | 2.970 |
| 3.000 | 1.780 | 0.250 | 1.870 | 0.050 | 0.030 | 0.720 | 0.050 | 0.070 | 0.160 | 0.470 | 3.030 |
| 3.000 | 1.790 | 0.250 | 1.880 | 0.050 | 0.030 | 0.730 | 0.050 | 0.060 | 0.170 | 0.470 | 2.930 |
| 3.000 | 1.730 | 0.240 | 1.810 | 0.050 | 0.030 | 0.690 | 0.050 | 0.060 | 0.170 | 0.460 | 2.800 |
| 3.000 | 1.680 | 0.240 | 1.750 | 0.050 | 0.030 | 0.670 | 0.050 | 0.060 | 0.170 | 0.450 | 2.540 |
| 3.000 | 1.690 | 0.240 | 1.770 | 0.050 | 0.030 | 0.670 | 0.050 | 0.070 | 0.230 | 0.440 | 2.230 |
| 3.000 | 1.700 | 0.250 | 1.790 | 0.050 | 0.040 | 0.690 | 0.050 | 0.080 | 0.220 | 0.420 | 2.170 |
| 3.000 | 1.720 | 0.270 | 1.790 | 0.070 | 0.050 | 0.690 | 0.060 | 0.080 | 0.250 | 0.400 | 2.170 |
| 3.000 | 1.810 | 0.330 | 1.860 | 0.100 | 0.080 | 0.720 | 0.070 | 0.100 | 0.280 | 0.410 | 2.250 |
| 3.000 | 2.410 | 0.800 | 2.230 | .410 | 0.310 | 0.890 | 0.230 | 0.230 | 0.390 | 0.470 | 2.150 |
| 3.000 | 8.960 | 5.790 | 6.590 | .040 | 3.440 | 3.730 | 2.830 | 2.570 | 2.590 | 2.580 | 4.130 |

Category 1.000 = Low Load

Category 2.000 = High Load

Category 3.000 = Viscous Load

6

EP 0 317 322 B1

TABLE 2 (Continued)

Acoustic Power in Frequency Bands 12-24 (15 sec. Integration Times)

| 12 | 13 | 14 | 15 | 16 | 17 | 18 | 19 | 20 | 21 | 22 | 23 | 24 |
|---|---|---|---|---|---|---|---|---|---|---|---|---|
| 2983.290 | 1259.850 | 1622.430 | 3427.700 | 3112.540 | 5506.620 | 2224.360 | 4071.370 | 2657.940 | 1523.530 | 662.720 | 112.760 | 148.990 |
| 3302.570 | 1379.530 | 1830.380 | 4039.590 | 3359.880 | 5779.940 | 2371.710 | 4308.390 | 2860.100 | 1573.900 | 616.840 | 114.540 | 142.230 |
| 3364.290 | 1393.230 | 1941.760 | 3954.290 | 3338.450 | 6374.440 | 2462.710 | 4138.250 | 2860.900 | 1545.300 | 588.910 | 118.070 | 151.100 |
| 3777.340 | 1568.650 | 2038.160 | 4291.220 | 3762.520 | 7366.120 | 2846.780 | 4348.450 | 3134.170 | 1520.860 | 647.640 | 124.990 | 149.040 |
| 4047.620 | 1714.930 | 2393.330 | 4760.200 | 4249.350 | 8166.240 | 2967.270 | 4630.450 | 3452.970 | 1762.970 | 667.240 | 136.880 | 147.990 |
| 4025.730 | 1781.970 | 2325.100 | 4537.050 | 4093.590 | 8341.440 | 3284.650 | 4541.290 | 3283.480 | 1651.610 | 731.560 | 149.110 | 142.770 |
| 4208.160 | 1707.830 | 2270.430 | 4742.730 | 4123.480 | 8479.180 | 3291.210 | 4484.520 | 3360.560 | 1558.920 | 693.310 | 160.670 | 143.820 |
| 4534.730 | 2035.230 | 2507.190 | 5047.200 | 4699.660 | 9400.740 | 3306.040 | 4648.860 | 3501.320 | 1611.830 | 680.070 | 168.360 | 143.870 |
| 4392.390 | 1787.150 | 2425.420 | 5292.160 | 4717.310 | 10343.920 | 3353.930 | 3961.470 | 3215.720 | 1429.790 | 723.280 | 170.690 | 146.680 |
| 4447.280 | 1700.400 | 2347.800 | 5315.300 | 4795.090 | 9835.370 | 3585.470 | 4424.920 | 3784.600 | 1509.520 | 621.310 | 166.190 | 155.950 |
| 4962.040 | 1887.010 | 2662.180 | 5944.610 | 5147.830 | 10715.280 | 3443.180 | 3825.140 | 3459.530 | 1608.240 | 637.160 | 174.920 | 142.290 |
| 5195.850 | 1988.140 | 2928.420 | 6040.860 | 5101.170 | 11302.040 | 3823.430 | 3622.840 | 3386.350 | 1624.820 | 632.080 | 208.220 | 140.480 |
| 5704.530 | 1941.010 | 2832.330 | 5979.290 | 4454.180 | 10613.470 | 3802.130 | 3563.370 | 3175.710 | 1612.100 | 611.780 | 195.690 | 136.220 |
| 4972.900 | 1816.510 | 2834.830 | 6524.770 | 4601.510 | 10619.240 | 4199.820 | 4335.730 | 3901.780 | 1635.640 | 576.670 | 218.140 | 131.750 |
| 5396.750 | 1824.700 | 3103.080 | 6792.230 | 4932.610 | 11414.100 | 3974.100 | 3818.930 | 3287.430 | 1434.920 | 540.180 | 205.440 | 123.620 |
| 5471.560 | 2057.260 | 3205.460 | 7425.410 | 5371.840 | 11170.170 | 4207.790 | 3878.130 | 3818.520 | 1723.350 | 580.920 | 208.860 | 128.520 |
| 6115.580 | 2280.790 | 3590.240 | 8204.600 | 5854.100 | 12625.440 | 4500.050 | 4448.990 | 3643.180 | 1895.050 | 633.590 | 207.950 | 134.260 |
| 7229.160 | 2387.080 | 3804.230 | 9346.020 | 5782.020 | 15869.030 | 4812.910 | 5003.670 | 4739.920 | 2110.600 | 798.870 | 241.310 | 94.880 |
| 146.360 | 234.570 | 326.050 | 1309.280 | 2015.620 | 1854.790 | 1957.220 | 1603.830 | 992.100 | 410.700 | 235.630 | 146.420 | 254.000 |
| 281.820 | 269.470 | 429.990 | 1720.050 | 2639.990 | 2833.700 | 2888.610 | 2696.660 | 1474.380 | 566.050 | 369.210 | 177.850 | 99.010 |
| 325.670 | 293.380 | 488.570 | 1973.630 | 3038.720 | 3187.270 | 3280.770 | 3137.470 | 1766.520 | 662.840 | 373.690 | 198.200 | 75.300 |
| 743.230 | 567.340 | 938.990 | 3379.390 | 4977.770 | 4226.370 | 4987.170 | 3824.510 | 2340.410 | 823.450 | 423.040 | 220.780 | 109.290 |
| 531.630 | 638.730 | 936.470 | 3303.950 | 5049.260 | 3681.960 | 4845.260 | 4203.560 | 2474.860 | 1136.170 | 429.160 | 231.060 | 89.140 |
| 523.200 | 662.110 | 898.190 | 3351.970 | 4825.940 | 3680.540 | 5060.540 | 4218.870 | 2262.360 | 1123.810 | 431.420 | 223.840 | 88.670 |
| 492.030 | 667.640 | 860.200 | 3618.350 | 4739.480 | 3508.250 | 4895.320 | 4349.300 | 2232.040 | 1341.090 | 410.380 | 203.760 | 88.620 |
| 490.680 | 627.260 | 816.840 | 3609.030 | 4582.260 | 3462.990 | 4745.530 | 4217.770 | 2070.260 | 1362.810 | 370.340 | 206.860 | 79.130 |
| 554.120 | 646.200 | 806.740 | 3571.110 | 4412.960 | 3490.950 | 4926.790 | 4305.960 | 1915.160 | 1367.610 | 386.610 | 196.450 | 81.260 |
| 567.260 | 654.370 | 811.130 | 3633.400 | 4212.490 | 3425.290 | 4884.790 | 4419.170 | 1993.180 | 1378.210 | 397.900 | 190.910 | 73.550 |
| 612.720 | 693.800 | 853.700 | 3755.580 | 4035.970 | 3346.590 | 4792.850 | 4314.740 | 1964.210 | 1457.120 | 403.480 | 182.790 | 76.500 |
| 645.240 | 741.990 | 897.270 | 4208.760 | 4311.240 | 3644.630 | 5092.610 | 4613.810 | 2146.940 | 1671.470 | 373.580 | 201.230 | 73.690 |
| 638.120 | 813.140 | 980.690 | 3884.580 | 5053.950 | 3755.920 | 5185.430 | 4800.500 | 2239.930 | 1701.770 | 354.060 | 184.710 | 82.220 |
| 763.190 | 909.550 | 1171.440 | 3951.480 | 5553.810 | 4106.800 | 5591.380 | 5339.070 | 2577.640 | 2043.050 | 383.750 | 161.050 | 87.240 |
| 794.960 | 909.340 | 1155.110 | 3944.240 | 5493.920 | 3967.260 | 5624.430 | 5157.190 | 2564.730 | 2015.700 | 410.030 | 170.840 | 98.990 |
| 856.090 | 938.210 | 1170.360 | 3944.660 | 5584.760 | 4163.710 | 5797.060 | 5230.270 | 2725.100 | 2179.590 | 389.970 | 145.190 | 96.080 |
| 852.790 | 954.610 | 1189.760 | 3961.410 | 5540.630 | 3884.980 | 5618.800 | 5624.670 | 2902.490 | 2211.190 | 400.170 | 147.140 | 101.490 |
| 3.900 | 2.930 | 2.190 | 16.700 | 44.930 | 34.690 | 42.060 | 17.940 | 37.950 | 25.150 | 163.490 | 341.080 | 119.210 |
| 3.900 | 3.180 | 2.040 | 16.680 | 43.890 | 33.220 | 45.130 | 17.530 | 39.530 | 26.760 | 117.850 | 424.640 | 92.530 |
| 4.500 | 4.600 | 2.720 | 18.090 | 41.070 | 37.510 | 42.250 | 17.100 | 39.210 | 26.130 | 138.830 | 360.380 | 121.960 |
| 4.030 | 3.330 | 2.040 | 14.420 | 41.020 | 35.580 | 43.380 | 16.300 | 40.300 | 25.270 | 119.440 | 410.020 | 93.100 |
| 3.920 | 3.350 | 1.960 | 14.930 | 41.180 | 38.030 | 44.260 | 17.030 | 40.050 | 25.940 | 118.090 | 412.210 | 98.700 |
| 3.910 | 3.230 | 1.940 | 14.920 | 42.870 | 35.390 | 42.290 | 17.590 | 40.200 | 26.480 | 120.810 | 395.910 | 89.880 |
| 3.930 | 3.480 | 2.220 | 14.710 | 41.160 | 33.690 | 44.430 | 17.440 | 39.260 | 24.750 | 112.420 | 422.480 | 98.130 |
| 3.820 | 3.270 | 2.320 | 16.070 | 42.020 | 33.730 | 49.790 | 16.320 | 38.370 | 28.750 | 118.670 | 479.740 | 118.240 |
| 3.710 | 3.200 | 2.150 | 15.160 | 41.180 | 36.600 | 51.880 | 15.900 | 35.990 | 30.540 | 126.510 | 430.300 | 155.970 |
| 3.620 | 3.110 | 2.220 | 14.880 | 39.320 | 37.830 | 56.070 | 16.560 | 34.080 | 24.330 | 141.760 | 418.830 | 221.660 |
| 3.560 | 3.070 | 2.510 | 13.900 | 39.030 | 39.020 | 58.530 | 15.740 | 29.110 | 23.070 | 119.000 | 570.410 | 245.640 |
| 3.410 | 2.910 | 2.260 | 12.620 | 37.590 | 36.940 | 57.320 | 15.160 | 26.860 | 24.440 | 117.540 | 575.750 | 248.110 |
| 3.320 | 2.940 | 2.050 | 11.440 | 33.690 | 35.340 | 54.150 | 13.860 | 26.330 | 22.320 | 128.220 | 629.510 | 210.030 |
| 3.340 | 3.040 | 2.200 | 12.050 | 34.880 | 35.780 | 55.180 | 14.250 | 26.640 | 22.500 | 132.430 | 627.910 | 234.510 |
| 3.240 | 3.030 | 2.250 | 11.310 | 33.300 | 36.090 | 51.650 | 14.760 | 28.620 | 17.910 | 169.020 | 837.030 | 168.940 |
| 5.030 | 4.690 | 3.630 | 11.830 | 35.520 | 33.910 | 50.140 | 15.370 | 27.720 | 22.140 | 153.000 | 791.360 | 186.340 |

### TABLE 3 - SIMCA Results

#### A Classification of Test Set of Example 1

| True cat | Calculated | | | | | | | | | | | |
|---|---|---|---|---|---|---|---|---|---|---|---|---|
| | cat | sds | fit | distance | cat | sds | fit | distance | cat | sds | fit | distance |
| 1 | 1 | 0.84 | 0 | 2.386E-01 | 2 | 99.99 | 123 | 1.210E+02 | 3 | 99.99 | 123 | 1.769E+07 |
| 1 | 1 | 1.02 | 0 | 2.898E-01 | 2 | 99.99 | 123 | 1.465E+02 | 3 | 99.99 | 123 | 1.972E+07 |
| 3 | 3 | 2.46 | 0 | 8.466E-01 | 1 | 99.99 | 123 | 3.820E+01 | 2 | 99.99 | 123 | 4.838E+02 |
| 3 | 3 | 0.87 | 0 | 2.980E-01 | 1 | 99.99 | 123 | 4.958E+01 | 2 | 99.99 | 123 | 4.697E+02 |
| 2 | 2 | 0.67 | 0 | 2.505E-01 | 1 | 15.61 | 3 | 4.413E+00 | 3 | 99.99 | 123 | 2.739E+06 |
| 2 | 2 | 0.89 | 0 | 3.311E-01 | 1 | 10.27 | 3 | 2.905E+00 | 3 | 99.99 | 123 | 2.659E+06 |

Category 1 = Normal Operation

Category 2 = Pump Running Dry

Category 3 = Pump Stopped

#### B Classification of Test Set of Example 2

| True cat | Calculated | | | | | | | | | | | |
|---|---|---|---|---|---|---|---|---|---|---|---|---|
| | cat | sds | fit | distance | cat | sds | fit | distance | cat | sds | fit | distance |
| 1 | 1 | 0.77 | 0 | 3.475E-01 | 2 | 4.89 | 0 | 1.645E+00 | 3 | 99.99 | 12 | 4.623E+05 |
| 1 | 1 | 0.83 | 0 | 3.712E-01 | 2 | 4.88 | 0 | 1.642E+00 | 3 | 99.99 | 12 | 4.642E+05 |
| 3 | 3 | 0.64 | 0 | 2.584E-01 | 2 | 99.99 | 12 | 1.548E+02 | 1 | 99.99 | 2 | 1.560E+02 |
| 3 | 3 | 0.87 | 0 | 3.492E-01 | 1 | 99.99 | 2 | 1.579E+02 | 2 | 99.99 | 12 | 1.620E+02 |
| 2 | 2 | 0.98 | 0 | 3.296E-01 | 1 | 99.99 | 2 | 6.713E+01 | 3 | 99.99 | 12 | 3.156E+05 |
| 2 | 2 | 1.46 | 0 | 4.916E-01 | 1 | 99.99 | 12 | 3.019E+02 | 3 | 99.99 | 12 | 3.881E+05 |
| 2 | 2 | 0.67 | 0 | 2.252E-01 | 1 | 99.99 | 2 | 1.154E+02 | 3 | 99.99 | 12 | 5.116E+05 |

Category 1 = Low Load

Category 2 = High Load

Category 3 = Viscous Load

## Claims

1. A method for monitoring the operating conditions of process plant or machinery characterised by the fact that the method comprises the steps of:

EP 0 317 322 B1

(a) detecting the sound intensity of the plant or machinery by means of a sound transducer, the output from which is an analogue signal, the intensity of which is proportional to the intensity of the sound in the audio frequency range,

(b) converting the analogue signal to a digital signal,

(c) passing the digital signal through a digital band-pass filter to select at least two frequency bands,

(d) utilising the signal power in these bands as signal descriptors and putting them into a multivariate pattern recognition procedure,

(e) utilising the pattern recognition procedure to develop soft models to characterise the signals recorded and to assign them to a particular category of known operating conditions,

(f) again detecting the sound intensity of the process or machinery by means of the sound transducer,

(g) converting the analogue signal to a digital signal,

(h) passing the digital signal through a digital band-pass filter to select the same frequency bands as in (c),

(i) utilising the signal power in these bands as signal descriptors and putting them into a multivariate pattern recognition procedure, and

(j) using the soft models as templates, such that when operating conditions repeat themselves they may be recognised, or a change in conditions may be detected.

2. A method according to claim 1 wherein the sound transducer is a microphone.

3. A method according to either of the preceding claims wherein the analogue electrical signal is amplified.

4. A method according to any of the preceding claims wherein the analogue electrical signal is passed through an analogue band-pass filter.

5. A method according to claim 4 wherein frequencies above 10 KHz are removed.

6. A method according to any of claims 4 to 5 wherein frequencies below 50 Hz are removed.

7. A method according to any of claims 4 to 6 wherein the digital band-pass filter is capable of selecting from 2 to 24 desired frequency bands.

8. A method according to any of the preceding claims wherein the multivariate statistical technique is the method of principal components analysis.

9. A method according to any of the preceding claims wherein the pattern recognition technique is the SIMCA technique.

**Patentansprüche**

1. Verfahren zur Überwachung der Betriebsbedingungen einer Betriebsanlage oder einer Maschinenanlage, dadurch gekennzeichnet, daß das Verfahren die Schritte

(a) des Nachweisens der Schallintensität der Anlage oder Maschine mittels eines Schallumformers, z.B. eines Mikrofons, dessen Ausgangssignal ein analoges Signal ist, dessen Intensität der Intensität des Schalls im Audiofrequenz-Bereich proportional ist,

(b) des Umwandelns des analogen Signals in ein digitales Signal,

(c) des Hindurchleitens des digitalen Signals durch ein digitales Bandpaßfilter, um wenigstens zwei Frequenzbanden auszuwählen,

(d) des Ausnutzens der Signalleistung in diesen Banden als Signalbeschreiber und des Einbringens derselben in einen Arbeitsgang der mehrdimensionalen Strukturerkennung,

(e) des Ausnutzens des Arbeitsgangs der Strukturerkennung zur Entwicklung eines weichen Modells zur Charakterisierung der aufgezeichneten Signale und der Zuordnung derselben zu einer besonderen Kategorie bekannter Arbeitsbedingungen,

(f) des erneuten Nachweisens der Schallintensität der Anlage oder Maschine mittels eines Schallumformers,

(g) des Umwandelns des analogen Signals in ein digitales Signal,

9

(h) des Hindurchleitens des digitalen Signals durch ein digitales Bandpaßfilter, um dieselben Frequenzbanden wie in (c) auszuwählen,

(i) des Ausnutzens der Signalleistung in diesen Banden als Signalbeschreiber und des Einbringens derselben in einen Arbeitsgang der mehrdimensionalen Strukturerkennung, und

(j) des Verwendens der weichen Modelle als Schablone, so daß sich wiederholende Betriebsbedingungen erkannt werden können oder eine Änderung der Bedingungen nachgewiesen werden kann, umfaßt.

2.  Verfahren nach Anspruch 1, worin der Schallumformer ein Mikrofon ist.

3.  Verfahren nach einem der beiden vorhergehenden Ansprüche, worin das analoge elektrische Signal verstärkt wird.

4.  Verfahren nach irgendeinem der vorhergehenden Ansprüche, worin das analoge elektrische Signal durch ein Analog-Bandpaßfilter geleitet wird.

5.  Verfahren nach Anspruch 4, worin Frequenzen oberhalb von 10 kHz entfernt werden.

6.  Verfahren nach irgendeinem der Ansprüche 4 bis 5, worin Frequenzen unterhalb von 50 Hz entfernt werden.

7.  Verfahren nach irgendeinem der Ansprüche 4 bis 6, worin das digitale Bandpaßfilter befähigt ist, 2 bis 24 gewünschte Frequenzbanden auszuwählen.

8.  Verfahren nach irgendeinem der vorhergehenden Ansprüche, worin die mehrdimensionale statistische Technik die Methode der Hauptkomponenten-Analyse ist.

9.  Verfahren nach irgendeinem der vorhergehenden Ansprüche, worin die Technik der Strukturerkennung die SIMCA-Technik ist.

**Revendications**

1.  Procédé pour le contrôle des conditions de fonctionnement d'une usine ou de machines de traitement, caractérisé par le fait que le procédé comprend les étapes qui consistent :

    (a) à détecter l'intensité des sons de l'usine ou des machines au moyen d'un transducteur acoustique dont le signal de sortie est un signal analogique ayant une intensité proportionnelle à l'intensité des sons dans la plage audiofréquence,

    (b) à convertir le signal analogique en un signal numérique,

    (c) à faire passer le signal numérique à travers un filtre passe-bande numérique pour sélectionner au moins deux bandes de fréquences,

    (d) à utiliser la puissance des signaux dans ces bandes en tant que descripteurs de signaux et à les introduire dans un processus de reconnaissance de forme à variables multiples,

    (e) à utiliser le processus de reconnaissance de forme pour développer des modèles logiciels afin de caractériser les signaux enregistrés et de les affecter à une catégorie particulière de conditions de fonctionnement connues,

    (f) à détecter de nouveau l'intensité des sons de l'usine ou des machines de traitement au moyen du transducteur acoustique,

    (g) à convertir le signal analogique en un signal numérique,

    (h) à faire passer le signal numérique à travers un filtre passe-bande numérique pour sélectionner les mêmes bandes de fréquences que dans (c),

    (i) à utiliser la puissance des signaux dans ces bandes en tant que descripteurs de signaux et à les introduire dans un processus de reconnaissance de forme à variables multiples, et

    (j) à utiliser les modèles logiciels en tant que gabarits, afin que, lorsque des conditions de fonctionnement se répètent elles-mêmes, elles puissent être reconnues, ou bien qu'une variation des conditions puisse être détectée.

2.  Procédé selon la revendication 1, dans lequel le transducteur acoustique est un microphone.

3. Procédé selon l'une des revendications précédentes, dans lequel le signal électrique analogique est amplifié.

4. Procédé selon l'une quelconque des revendications précédentes, dans lequel le signal électrique analogique est transmis à travers un filtre passe-bande analogique.

5. Procédé selon la revendication 4, dans lequel des fréquences supérieures à 10 kHz sont éliminées.

6. Procédé selon l'une des revendications 4 et 5, dans lequel des fréquences inférieures à 50 Hz sont éliminées.

7. Procédé selon l'une quelconque des revendications 4 à 6, dans lequel le filtre passe-bande numérique est capable de sélectionner 2 à 24 bandes de fréquences souhaitées.

8. Procédé selon l'une quelconque des revendications précédentes, dans lequel la technique statistique à variables multiples est la méthode d'analyse des composantes principales.

9. Procédé selon l'une quelconque des revendications précédentes, dans lequel la technique de reconnaissance de forme est la technique SIMCA.

FIG.1

# FIG. 2

PRINCIPAL COMPONENT ANALYSIS
PUMP ACOUSTIC SIGNALS.

KEY:
1. Pump normal
2. Pump running dry
3. Pump stopped
( * Fifteen threes
plotted in this area)

FIG.3

PRINCIPAL COMPONENT ANALYSIS
BLENDER ACOUSTIC SIGNALS.

KEY:
1. Blender low load
2. Blender high load
3. Blender viscous load
(* Sixteen threes plotted
    in this area)